# EUROPEAN PATENT APPLICATION

(11) **EP 1 518 459 A1**
(43) Date of publication of application: **30.03.2005**
(21) Application number: 03078095.1
(22) Date of filing: 29.09.2003
(51) Int. Cl.: A01N 51/00, A01N 47/40

(54) **Molluscicidal agents**

(71) Applicant: Praktijkonderzoek Plant en Omgeving B.V., 6708 PD Wageningen (NL)
(72) Inventor: Ester, Albert, 8231 BR Lelystad (NL)
(74) Representative: Prins, Adrianus Willem, Mr. Ir.

(57) **Abstract**

The invention relates to a molluscicidal agent of the formula: 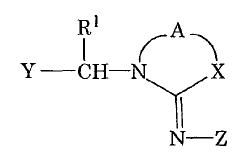 wherein R¹, A, X, Y, Z are as defined in claim 1 which is especially suited for controlling snails and slugs.

The invention further relates to methods of preventing mollusc-related damage to a plant and/or for controlling a mollusc in horticulture or agriculture in which an effective amount of a molluscicidal agent of the invention is brought into contact with the mollusc.

## Description

### FIELD OF THE INVENTION

The invention relates to molluscicidal agents especially suited for controlling slugs and snails. The invention further relates to methods of preventing mollusc-related damage to a plant and/or for controlling a mollusc in horticulture or agriculture in which an effective amount of a molluscicidal agent of the invention is brought into contact with the mollusc.

### BACKGROUND OF THE INVENTION

Slugs and snails (terrestrial gastropod molluscs) are capable of causing extensive damage to horticultural ornamental plants and agriculture food crops. They are omnivorous, consuming leaves, bulbs, tubers, fungi, lichens, algae and animal matter. Their damaging effects on human crops such as leafy vegetables and fruits and animal crops such as hay and clover is most extensive as they can consume their own weight in food materials in a matter of days.

Slugs and snails are closely related members of the phylum mollusca. Snails have a large external shell used for protection against predators and adverse climatic conditions. However, snails require a living environment containing large quantities of calcium containing materials, including lime (CaCO₃). Calcium containing materials are necessary for the snail to develop its shell. Therefore, most snails are found in areas having soil rich in calcium.

Slugs do not have an external shell and do not require calcium rich soil to survive. Although slugs are capable of burrowing into the earth for food and shelter, they are vulnerable to desiccation and death in open and unshaded areas. Therefore slugs primarily subsist in high moisture climates.

Slugs and snails, if uncontrolled can propagate at a rapid rate, causing enormous horticultural and agricultural damage. Because they are semi-nocturnal, they often avoid capture by predators.

One method of controlling slugs comprises the use of a composition having an attractant (e.g. lettuce) combined with calcium arsenate, an environmentally hazardous poison.

Another chemical molluscicide, metaldehyde which is a polymer of acetaldehyde with the empirical formula C₈H₁₆O₄, formed by the polymerization of four to six acetaldehyde molecules is still in use today and essentially causes death by dehydration. Metaldehyde also has numerous safety and efficacy problems. First, metaldehyde is toxic to both humans and animals. Furthermore, the efficacy of metaldehyde as a molluscicide is limited. It is only effective under certain environmental conditions. For metaldehyde to function, dry, warm and sunny conditions must be present. These conditions enhance the desiccating effects caused by metaldehyde. However, when moist, overcast conditions exist, snails and slugs can overcome the desiccating effects of metaldehyde, by excreting the material from their bodies in a matter of days.

Methiocarb (4-methylthio-3,5-xylyl methylcarbamate or mercaptodimethur) is another chemical molluscicide that is presently used. Although the total volume of use is relatively low, methiocarb is considered an important tool for controlling slugs and snails in nurseries and greenhouses. Methiocarb however has some important ecological downsides. It is toxic to terrestrial mammals and very highly toxic to birds, fish, aquatic invertebrates and honey bees.

At present there is a need for an effective molluscicidal agent capable of providing protection to horticultural and agricultural plants and crops against slugs and snails and that is less environmentally damaging than the compounds of the prior art. The present invention represents a new and improved molluscicide composition satisfying this need, as described herein below.

### SUMMARY OF THE INVENTION

In a first aspect the present invention provides the use of a compound of the formula: 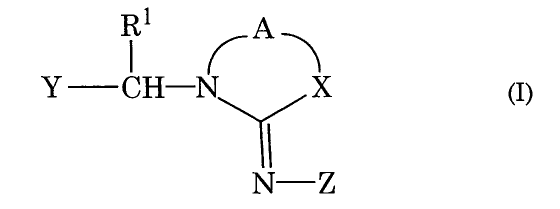 wherein
- R¹: denotes a hydrogen atom or a methyl group,
- A: denotes an ethylene group which can be substituted by methyl, or a trimethyl goup which can be substituted by methyl,
- X: denotes an oxygen or sulphur atom or the group 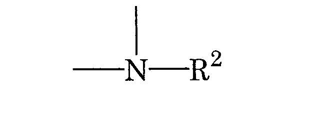 or 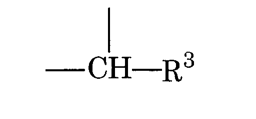 wherein
- R²: denotes a hydrogen atom, a C₁-C₄-alkyl group which can be substituted by a substituent selected from amongst halogens, C₁-C₄-alkoxy groups, C₁-C₄-alkylthio groups and cyano, a C₂-C₄-alkenyl group, a C₂-C₄-alkinyl group, a pyridylmethyl group which can be substituted by halogen and/or methyl, a benzyl group which can be substituted by halogen and/or methyl, a formyl group, an alkylcarbonyl group having 1 or 2 carbon atoms in the alkyl structural unit which can be substituted by halogen, a phenylcarbonyl group which can be substituted by halogen and/or methyl, an alkoxy or alkylthiocarbonyl group having 1 to 4 carbon atoms in the alkyl structural unit, a phenoxycarbonyl group, a C₁-C₄-alkylsulphonyl group which can be substituted by halogen, or a phenylsulphonyl group which can be substituted by methyl, and
- R³: denotes a hydrogen atom, and
- Y: denotes a 5- or 6-membered heterocyclic group which contains two or three hetero atoms selected from amongst oxygen, sulphur, and nitrogen atoms, at least one of these being a nitrogen atom, or denotes a 3-pyridyl group, the heterocyclic group and the 3-pyridyl group optionally being substituted by at least one substituent selected from amongst halogen atoms, alkyl groups having 1 to 4 carbon atoms, alkoxy groups having 1 to 4 carbon atoms, alkylthio groups having 1 to 4 carbon atoms, halogenoalkyl groups having 1 to 4 carbon atoms, halogenoalkoxy groups having 1 to 4 carbon atoms, alkylsulphonyl groups having 1 to 4 carbon atoms, the cyano group and the nitro group, and
- Z: denotes the group

―NO₂

or

―CN,
as a molluscicidal agent.

In a preferred embodiment of the first aspect of the present invention, use is provided of a compound of the formula: 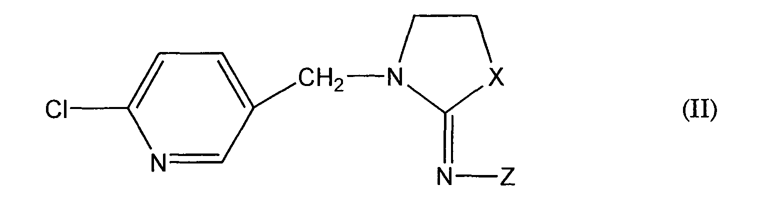 wherein
- X: denotes a sulphur atom or the group 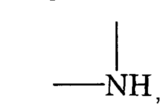 and
- Z: denotes the group

―NO₂

or

―CN.
More Preferably, said compound is thiacloprid or imidacloprid, more preferably thiacloprid

In another aspect, the present invention provides a molluscicidal composition comprising a compound of the formula (I), preferably according to the formula (II), more preferably thiacloprid as an active ingredient, and an agronomically acceptable carrier.

Other aspects of the present invention relate to a seed comprising a coating, said coating comprising a compound of the formula (I) as defined above, preferably according to the formula (II) as defined above, more preferably thiacloprid, and to a method of coating a seed, comprising treating a seed with a coating composition, said coating composition comprising a compound according to the formula (I) as defined above, preferably according to the formula (II) as defined above, more preferably thiacloprid, and a coating compound.

In yet another aspect, the present invention provides a method of preventing mollusc-related damage to a plant and/or for controlling a mollusc in horticulture or agriculture in which an effective amount of a composition comprising the molluscicidal agent of the invention is brought into contact with the mollusc.

In still another aspect, the present invention provides a molluscicidal composition concentrate comprising a concentrated formulation of the molluscicidal composition.

The present invention also provides a method for the preparation of a molluscicidal composition, comprising combining a compound of the formula (I), preferably according to the formula (II), more preferably thiacloprid as an active ingredient, with an agronomically acceptable carrier.

### DETAILED DESCRIPTION OF THE INVENTION

The term "molluscicide" or "molluscicidal agent" means an active ingredient or chemical which is intended to mitigate a mollusc (gastropods, subclass pulmonata) including snails and slugs and related organisms. The term includes not only a killing effect but also a repelling effect. For purposes of this invention, a molluscicidal composition may besides the active ingredient or molluscicidal agent of the present invention also include other compounds which can control molluscs. The molluscicidal composition preferably comprises 5 to 90% by weight of the molluscicide. The molluscicide may be in the form of a pure active ingredient, a technical grade of the active ingredient, or an active ingredient formulated with one or more agronomically acceptable carriers.

By "agronomically acceptable carrier" is meant any substance which can be used to aid the dispersion of the active ingredient without impairing the active ingredient's effectiveness and which by itself has no significant detrimental effect on the soil, equipment, desirable plants, or the agronomic environment. A very suitable agronomically acceptable carrier is water. Other suitable carriers are solid carriers such as in the form of granules as described in more detail hereinbelow.

The present invention now provides the use of a compound of the formula: 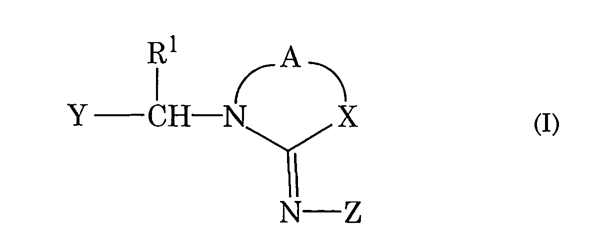 wherein
- R¹: denotes a hydrogen atom or a methyl group,
- A: denotes an ethylene group which can be substituted by methyl, or a trimethyl goup which can be substituted by methyl,
- X: denotes an oxygen or sulphur atom or the group 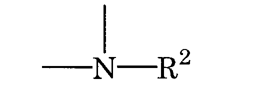 or 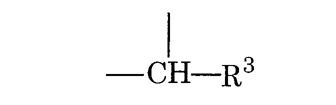 wherein
- R²: denotes a hydrogen atom, a C₁-C₄-alkyl group which can be substituted by a substituent selected from amongst halogens, C₁-C₄-alkoxy groups, C₁-C₄-alkylthio groups and cyano, a C₂-C₄-alkenyl group, a C₂-C₄-alkinyl group, a pyridylmethyl group which can be substituted by halogen and/or methyl, a benzyl group which can be substituted by halogen and/or methyl, a formyl group, an alkylcarbonyl group having 1 or 2 carbon atoms in the alkyl structural unit which can be substituted by halogen, a phenylcarbonyl group which can be substituted by halogen and/or methyl, an alkoxy or alkylthiocarbonyl group having 1 to 4 carbon atoms in the alkyl structural unit, a phenoxycarbonyl group, a C₁-C₄-alkylsulphonyl group which can be substituted by halogen, or a phenylsulphonyl group which can be substituted by methyl, and
- R³: denotes a hydrogen atom, and
- Y: denotes a 5- or 6-membered heterocyclic group which contains two or three hetero atoms selected from amongst oxygen, sulphur, and nitrogen atoms, at least one of these being a nitrogen atom, or denotes a 3-pyridyl group, the heterocyclic group and the 3-pyridyl group optionally being substituted by at least one substituent selected from amongst halogen atoms, alkyl groups having 1 to 4 carbon atoms, alkoxy groups having 1 to 4 carbon atoms, alkylthio groups having 1 to 4 carbon atoms, halogenoalkyl groups having 1 to 4 carbon atoms, halogenoalkoxy groups having 1 to 4 carbon atoms, alkylsulphonyl groups having 1 to 4 carbon atoms, the cyano group and the nitro group, and
- Z: denotes the group

―NO₂

or

―CN,

as a molluscicidal agent.

In a preferred embodiment the present invention provides the use of a compound of the formula: 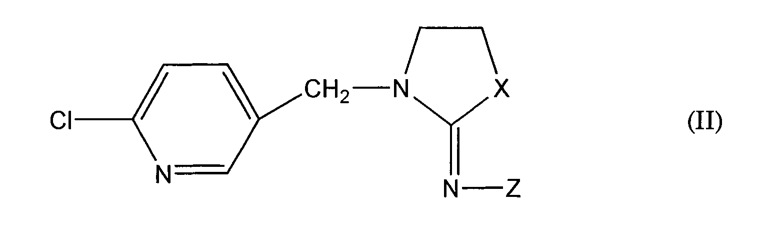 wherein X is an -NH or -S group, and Z is an -NO₂ or -C≡N group, or a derivative thereof, as a molluscicidal agent.

A "derivative" as used herein, refers to a chemically related compound obtained by the chemical modification of a compound of the invention by such chemical reactions as substitution, addition, and elimination reactions. Chemical modifications of a compound of the invention can include, for instance, replacement of a hydrogen by an alkyl, acyl, or amino group whereby the compound essentially retains its molluscicidal effect.

In preferred embodiments of the present invention use is provided of N-[3-(6-chloropyridin-3-ylmethyl)thiazolidin-2-ylidene]cyanamide (thiacloprid) and/or 1-(6-chloro-3-pyridylmethyl)-N-nitroimidazolidin-2-ylideneamine (imidacloprid), wherein X is an -S group and Z is a -C=N group; and X is an -NH group and Z is an -NO₂ group, respectively. In even more preferred embodiments of the present invention use is provided of thiacloprid as a molluscicidal agent.

Thiacloprid can be used in lower dosages than imidacloprid. Experiments, performed as described in the examples below, demonstrated that the effects in plant damage reduction and number of slug fecal pellets obtained by the use of thiacloprid were matched only by using higher dosage of imidacloprid and that even at the lower dosage tested, the use of thiacloprid resulted in significantly more utilizable plants than imidacloprid. The use of less active substance reduces the chances of phytotoxic effects on the plants during germination.

It is known that compounds of the formula (I) possess insecticidal (see e.g. EP 0 235 725 and EP 0 580 553) and fungicidal properties (DE 1995 6098). It has now surprisingly been found that compounds of the formula (I), alone or in combination, or in combination with other active substances, have an outstanding molluscicidal (snail/slug-killing) effect

Thiacloprid and imidacloprid for instance are neonicotinyl insecticides used mainly for control of pest insects in fruits, vegetables, ornamental plants and buildings. The environmental safety as determined from exposure and toxicity data of these compounds showed that they will pose a negligible risk to terrestrial microflora, terrestrial plants, earthworms, birds, mammals, vascular/non-vascular aquatic plants and fish under normal conditions of practical use. As expected for insecticides, non-target terrestrial and aquatic arthropods are sensitive to the compound.

The advantage of the use of the compounds according to the formula (I) above compounds such as methiocarb and other carbamates is that these compounds exhibit a lower level of toxicity towards for instance birds, which makes these compounds better suited for use in sewing seed. Furthermore, the use of compounds of the formula (I) is less environmental burdening and does not result in half dead slugs that form a threat for, for instance, hedgehogs.

The metaldehydes are known to be toxic to dogs and a formulation thereof with an active substance content higher than about 40 wt.% is technically unfeasible. This means that during seed treatment the amount of active substance that can be provided to the seed is limited.

The present invention relates to molluscicidal compositions comprising at least one compound of the formula (I) as an active ingredient alone in combination with other active substances, preferably fungicides, herbicides and/or fertilizers.

In one aspect, the present invention provides methods and materials for the prevention, control, and eradication, of mollusc infestation and, more particularly, mollusc-related damage to plants. An amount of the composition that is effective to cause such prevention, control, and/or eradication will be referred to herein as an "effective amount" or a "molluscicidal-effective amount". According to one embodiment of this aspect the invention provides a method of preventing mollusc-related damage to a plant in which an effective amount of a composition comprising the molluscicidal agent of the invention is administered to the locus, roots, leaves, or seeds of said plant. In another embodiment, the present invention provides a method of controlling a mollusc in horticulture or agriculture comprising applying to the mollusc, the locus of the mollusc, or a food source of the mollusc a molluscicidal composition of the invention. In this embodiment a mollusc or its environment is contacted with a molluscicidal-effective amount of a composition of the invention.

Molluscs which may be controlled by methods and compositions of the present invention are preferably molluscs comprised in the *gastropod* class, more preferably the subclass *pulmonata,* even more preferably snails and slugs, and most preferably the grey field slug *(Deroceras reticulatum).*

The active ingredients may be prepared by any method known in the art, for instance as described in EP 0 235 725.

The compositions of the present invention may be in the form of liquids, powders, or solids and may be delivered in the form of for instance a solution, an emulsion, a suspension, a powder, a foam, a paste, a granulate or an aerosol.

A typical composition comprises a compound of the formula (I) in a concentration of from 0.01 to 95% by weight, in particular from 0.1 to 90% by weight of the composition. Preferably a molluscicidal composition comprises more than 40, more preferably more than 50, even more preferably more than 60, yet more preferably more than 70 wt.% of a compound of the formula (I) as active substance. The concentration of active ingredient in a deliverable or ready for use formulation may vary in a wide range and may be as low 0.0000001 wt.% and as high as 99 wt%.

A molluscicidal composition comprising the molluscicidal agent of the invention further comprises an agronomically acceptable carrier.

Suitable carriers or diluents or solvents for providing liquid formulations of the active substance include aromatic hydrocarbons such as xylene, toluene or alkylnaphtalene, chlorinated aromatic or chlorinated aliphatic hydrocarbons such as chlorobenzene, chloroethylene or methylenechloride, aliphatic hydrocarbons such as cyclohexane or paraffin, for instance mineral oil fractions, alcohols such as butanol or glycol and ethers and esters thereof, ketones such as aceton, methylethylketon, methylisobutylketon or cyclohexanon or strongly polar solvents such as dimethylformamide, dimethylsulfoxide and water.

Volatile gas-like diluents or carriers, i.e. substances that are in the gas-phase at normal environmental temperature and pressure, may also be used and may include for instance butane, propane, nitrogen gas and carbondioxide.

As solid carriers pulverized natural minerals such as kaolin clay, talc, chalk, quartz, montmorillon or diatom earth or pulverized synthetic minerals such as dispersed silica, aliminiumoxide, and silicate may be used. As solid carriers for granulate, also size reduced and fractionated natural stone materials such as calcite, marble, sepiolith and dolomite, or synthetic granulates from inorganic and organic powders such as from polymers or granulates from organic materials as coconut shells, corn cobs and tobacco stems may be used.

Typical amounts of said carrier in a composition comprising the molluscicidal agent of the invention are between 1 and 99 % by weight of the composition, depending on the type of carrier chosen. The skilled person will appreciate that suitable amounts of carriers can be chosen to suit the particular application wherein the composition of the invention is used.

The composition may further comprise other ingredients to aid in dispersibility of the pesticide in water, to modify surface tension of the spray, or to promote adhesion of the active agent. These additional ingredients are collectively termed excipients and may include for instance inert carriers, diluents, surfactants, dispersants, spreaders, stickers, antifoam agents, thickeners, dyes, colorants, antifreeze compounds and emulsifiers. One skilled in the art will recognize circumstances where such excipients are typically combined with the molluscicide to be applied. Further inert ingredients useful in the present invention can be found in McCutcheon's, vol. 1, "Emulsifiers and Detergents," MC Publishing Company, Glen Rock, N,J,, U.S.A., 1996. Additional inert ingredients useful in the present invention can be found in McCutcheon's, vol. 2, "Functional Materials," MC Publishing Company, Glen Rock, New Jersey, U.S.A., 1996.

Biological efficacy of pesticides is influenced by many factors, particularly the residence time of the pesticide on the treated surface, which is often a plant leaf or seed surface. A major factor influencing the residence time is the degree to which the pesticide resists wash-off by rain, that is, rainfastness. With liquid formulations, rainfastness may be improved by including ingredients in the formulation or adding such ingredients to the spray tank (tank mixing) that, during drying, provide a water-resistant bond between the pesticide and the substrate. For example, emulsified oil or water insoluble polymers prepared in emulsion have been used to improve liquid formulation rainfastness. One widely used material is a formulation comprising a carboxylated synthetic latex emulsion polymer, a primary aliphatic oxyalkylated alcohol, and water. This material has been shown to improve the efficacy of a variety of pesticides.

Surfactants that may be employed in compositions of this invention include for instance one or more of various non-ionic, anionic, and amphoteric surfactants. Examples of non-ionic surfactants which are useful include polyalkylene glycol ethers and condensation products of alkyl phenols, aliphatic alcohols, aliphatic amines, and fatty acids with ethylene oxide, propylene oxide or their mixtures such as the ethoxylated alkyl phenols or ethoxylated aryl and polyaryl phenols and carboxylic esters solubilized with a polyol or polyoxyethylene. Anionic surfactants include salts of alkyl aryl sulphonic acids, sulphated polyglycol ethers, salts of sulfosuccinic acid esters with hydrophobes such as 2-ethylhexanol, salts of phosphated polyglycol ethers, alkyl sarcosine salts, alkyl isethionate salts, and derivatives of taurine.

As dispersants, substances such as lignosulphonates and methylcellulose may be used.

The compositions of this invention may be prepared in a variety of ways. One method is to mechanically combine the molluscicide with the carrier, both components in the form of solids. This mixing process can range from as simple a procedure as physically blending the two solid materials together to as complex a process as blending the two components together with additional components and forming a granular material wherein the granular particles contain both components. Alternatively, the molluscicide may be mixed with a dispersible granule forming a surface coating on the granule. The compositions can also be prepared by combining an aqueous dispersion or solution of the molluscicidal agent with a suitable liquid carrier optionally combined with a solid carrier.

Compositions intended for the control of agricultural pests are typically applied by spraying a composition comprising the pesticide using water as a carrier liquid. For this reason, pesticide compositions are generally supplied to the grower in formulations which are intended to be dissolved or dispersed in water. These formulations may be liquid formulations such as aqueous solutions or emulsifiable concentrates or solid formulations such as wettable powders or granular formulations. Solid formulations have many advantages over liquid formulations in terms of cost, storage, and packaging, including disposal of packaging.

The composition comprising the molluscicidal agent of the invention may therefore also be provided in the form of a concentrate, that can be diluted just prior to use, e.g. by dilution with water. In another aspect therefore the present invention provides a molluscicidal composition concentrate comprising a 1 to 10000, preferably 100 - 5000 times concentrated formulation of the corresponding molluscicidal composition of the invention. Generally, such concentrates are less perishable than the corresponding diluted composition.

The molluscicidal composition comprising the molluscicidal agent of the invention may be used to treat the locus of the plant or mollusc, i.e. the soil or substrate wherein the plant or mollusc resides. Alternatively, plants may be treated with a composition comprising the molluscicidal agent of the invention by contacting roots, leaves, stems, fruits or seeds of said plant with the composition. Depending on the type of plant and method of cultivation it may in some cases be preferred to treat the seeds prior to seeding, thereby providing the molluscicidal compound to the seedling. Suitable crops for seed treatment are for instance (winter) wheat, (winter) oilseed rape, (winter) barley, grass and sugar beet when sown directly in erosion limiting ground covering plants.

A particular advantage of providing the compound to the seeds is that environmental contamination with the compound is limited and the compound is presented at the desired location in a specific manner. A seed treatment of a molluscicide could be one alternative to bait pellets, and may have many economic and environmental advantages. Seed coatings allow better targeting of the active ingredient, reduces the amount of active ingredient applied, and a separate field-pass for pesticide application is avoided. In addition, unlike slug pellets that are broadcast on the soil surface, coated seeds would be drilled below ground, making the active ingredient less available to wildlife. Thus, the cost of slug control to growers and the environment could be reduced.

Seed treatment may include every type of treatment known to the skilled person to improve the quality or handling ability of the seed and in particular to provide the seed with a molluscicidal compound according to the present invention. In particular, seed coating and seed pelleting are envisaged.

In seed coating, the seed is coated with a film of the molluscicidal compositions comprising the molluscicidal agent of the invention and a suitable coating compound. Coating compounds used in a composition of the invention for the coating of seeds may comprise film formers (polymer binders), capable of forming a film upon drying, such as water-soluble polymers like starch, methylcellulose, gum Arabic, gelatin or hydroxyethyl cellulose, or polysaccharide hydrolysate, such as carboxymethyl cellulose or carboxymethyl starch hydroxylate. The coating composition may further comprise one or more of the following coating components: a secondary film former (e.g. sodium alginate, sodium carboxymethylcellulose, pectin, gelatin, propylene glycol alginate, methylcellulose, polydextrose or polyvinylpyrrolidone), a plasticizer (e.g. glycerin, maltitol solution, propylene glycol, polyethylene glycol, triethyl citrate, glyceryl triacetate, or any other material of similar plasticizing ability), a surfactant (e.g. soya lecithin, sodium lauryl sulfate, polysorbate 80, or polyoxyethylene, polyoxypropylene block copolymers or other surfactants as described above), a glidant (e.g. talc, colloidal silicon dioxide, or stearic acid), a suspension aid (e.g. xanthan gum, propylene glycol alginate, or pectin), a colorant (e.g. titanium dioxide, iron oxides, natural pigments, or dyes) and a carrier as described above. Concentrations of the various compounds are those usually applied and are known to the skilled person. The molluscicidal compound of the invention may suitably constitute between 1-70 wt % of a coating composition. Suitably, film forming polymer may constitute between 30-90 wt% of the composition, the remaining coating components generally being present in weight percentages of between 0 to 10.

Film coating requires use of specialized equipment that spray seeds with relatively large volumes of compositions comprising the molluscicidal compound and polymer binders with simultaneous drying to ensure that seed moisture content is unchanged. The seed usually undergoes several cycles of spraying and drying, providing the opportunity to apply different compositions sequentially. Various fluidized bed systems for film coating are known to the art. In sprouted bed systems for instance, seeds are coated by a mist of the composition as they move through the air stream in a systematic flow pattern. In drum coaters, seeds are held in a rotating cylindrical pan with spraying units. Dry warmed air is drawn through perforations in the drum wall and holds the seed in a fluidized state. Stirrer blades gently mix the seeds to ensure even coverage from the spray nozzles. Continuous throughput high volume film coating equipment is also available for this purpose.

The pelleting of seed using compositions of the present invention is also envisaged. The purpose of seed pelleting is to build up individual or groups of small, irregularly shaped seeds into spherical capsules that ensure precision planting. Pelleting materials may include inert filler materials, such as chalk, peat, sand, or other fillers, such as those selected from the carriers described above, which are bound to the seed with adhesives such as calcium sulphate, starch etc. These are applied to seeds in aqueous suspensions in rotating mills. Incremental layers are added to the seed until the appropriate size and shape is achieved.

Previous work on seed treatments to control slug damage have focussed on protecting seeds as opposed to seedlings, with the most promising chemicals being metaldehyde, methiocarb and the non-lethal invertebrate feeding deterrents cinnamamide and 3,5-dimethoxycinnamic acid (DMCA). However, slugs do generally not feed on seeds, instead causing most damage to newly emerged seedlings. It was demonstrated previously that coating seeds with molluscicides protects not only the seed, but also the emerged seedling. Therefore, in a preferred embodiment of a method of the present invention a seed is treated with the molluscicidal composition.

The compositions of the present invention can be applied to seeds by any standard seed treatment methodology, including but not limited to mixing in a container (e.g., a bottle or bag), mechanical application, tumbling, spraying, and immersion. Any conventional active or inert material can be used for contacting seeds with pesticides according to the present invention, such as conventional film-coating materials including but not limited to water-based film coating materials such as Sepiret (Seppic, Inc., Fairfield, N.J.) and Opacoat (Berwind Pharm. Services, Westpoint, Pa.).

Seed-treatment is not always possible, e.g. in the case of perennials. In such instances whole plant treatment is provided. Suitable plants for whole plant treatment are, for instance, Brussels sprout, strawberry, potted plants (for instance *Cymbidium*, *Alstroemeria*, *Hosta,* etc.), citrus and rice.

Molluscicidal compositions comprising the molluscicidal agent of the invention can be delivered using known methods and materials. For example, the compositions of the invention can be delivered in the form of liquids, powders, or solids depending on the desired route of administration and factors such as soil type, climate, plant species, among other considerations. The dilution and rate of application using these methods generally depends upon the type of equipment employed, the method and frequency of application desired, the pests to be controlled, and the plant parts which are subject to damage.

The compositions of the present invention may for instance be applied to plant foliage as aqueous sprays by methods commonly employed, such as conventional hand-held (low-litre) spray bottles, high-litre hydraulic or pressurized sprayers, air-blast, and aerial sprays.

Powders can be delivered by hand or by dispensers that are pushed or towed. Solid formulations can be delivered by hand or by machine.

As described above, the liquid, solid, or powdery composition comprising the molluscicidal agent of the invention can contain additional ingredients or excipients such as inert carriers or dilution agents. Also other pesticides, such as herbicides, fungicides and/or even other molluscicides may be included in the compositions of the invention. Suitable fungicides would include such compounds as benzo[β]thiophenecarboxylic cyclohexylamide S,S-dioxide, dichlofluanid, fluorfolpet, 3-iodo-2-propinylbutyl carbamate, tolylfluanid and azoles such as azaconazole, cyproconazole, epoxiconazole, hexaconazole, metconazole, propiconazole and tebuconazole. Suitable other molluscicides would include such compounds as fentin acetate, metaldehyde, methiocarb, niclosamide, thiodicarb and trimethacarb. A particular advantage of the compound of the present invention is however, that it is also effective as a fungicide and insecticide itself, and it is therefore not necessary to formulating it in combination with other insecticides or fungicides in order to achieve that particular goal.

It may be desirable to include additional excipients in the composition or add these excipients in the spray tank. Such excipients include surfactants, dispersants, spreaders, stickers, antifoam agents, emulsifiers, and other similar materials as known in the art, for instance as described in McCutcheon's "Emulsifiers and Detergents" and McCutcheon's "Functional Materials", published annually by McCutcheon Division of MC Publishing Company, Glen Rock, New Jersey, U.S.A.

The compositions of the present invention can also be mixed with fertilizers or fertilizing materials before their application. In one type of solid fertilizing composition, particles of a fertilizer or fertilizing ingredients, such as ammonium sulphate, ammonium nitrate, or ammonium phosphate, can be coated with one or more of the compositions. The compositions and solid fertilizing material can also be admixed in mixing or blending equipment, or they can be incorporated with fertilizers in granular formulations. Any relative proportion of fertilizer can be used which is suitable for the crops and weeds to be treated. The compositions of the invention will commonly comprise from 5% to 50% of the fertilizing composition. These compositions provide fertilizing materials which promote the rapid growth of desired plants, and at the same time control molluscs.

The optimal combination of ingredients can be selected to provide the highest molluscicidal efficacy of the composition comprising the molluscicidal agent of the invention or to attain sufficient molluscicidal efficacy wile preventing undesired side effects of the treatment. Efficacy may be determined by any method known to the skilled person, for instance by using the methods as described in the Examples below.

The following Examples describe preferred embodiments of the invention. Other embodiments within the scope of the claims herein will be apparent to one skilled in the art from consideration of the specification or practice of the invention as disclosed herein. It is intended that the specification, together with the examples, be considered exemplary only, with the scope and spirit of the invention being indicated by the claims which follow the examples. In the examples all percentages are given on a weight basis unless otherwise indicated.

### EXAMPLES

### Example 1

### Experimental set-up

Winter wheat (Kampa race; thousand grain weight of 51 grams) was used in an experiment to test the efficacy of the compositions of the present inventions in relation to known molluscicidal compounds. The seeds were disinfected for soil and germ moulds with 2 ml of Beret Gold (comprising 25 g/l of the fungicide fludioxonil) per kg of seed.

Table 1 shows the various compounds tested and dosages used for the control of slugs. Sepiret® was added to all dry disinfections, and is the coating that was added to all agents of which the formulation was not suitable for coating.

Table 2 provides an overview of the amounts of diluent water and Sepiret® used for treating the wheat seeds. Table 2 further provides the quality of the coating and the percentages of germinating seeds in a seed germination test. In this test, the percentage of germination of 3 x 50 seeds, rolled in paper, was determined after 6 days at 22°C (continuously) and a 16 hours light regime.

**Table 1.**

| **Compounds and dosages used for the control of slugs in winter wheat.** | | | | | |
|---|---|---|---|---|---|
| **Test No.** | **Active compound** | **Trade mark or formulation** | **Dosage Formulated (ml)** | **per kg seed Active comp.** | **Manufacturer/ (g) Supplier** |
| | **Insecticides** | | | | |
| AA | azadirachtine | MO1 | 2 | 2 | Plant Support |
| BB | azadirachtine | MO1 | 10 | 10 | Plant Support |
| HH | abamectine | Trigard 75 WP | 2 | 1.5 | Syngenta |
| II | abamectine | Trigard 75 WP | 10 | 7.5 | Syngenta |
| JJ | thiamethoxam | Cruiser FS 350 | 2 | 0.7 | Syngenta |
| KK | thiamethoxam | Cruiser FS 350 | 4 | 1.4 | Syngenta |
| LL | thiamethoxam | Cruiser FS 350 | 8 | 2.8 | Syngenta |
| MM | thiamethoxam | Cruiser FS 350 | 23 | 8.0 | Syngenta |

| | **Molluscicides** | | | | |
|---|---|---|---|---|---|
| U | methiocarb | Mesurol 500 FS | 2 | 1 | Bayer |
| V | methiocarb | Mesurol 500 FS | 4 | 2 | Bayer |
| W | methiocarb | Mesurol 500 FS | 8 | 4 | Bayer |
| X | cinnamaldehyde | Cinnacure (30%) | 2 | 0.6 | CertisEurope |
| Y | cinnamaldehyde | Cinnacure (30%) | 4 | 1.2 | CertisEurope |
| Z | cinnamaldehyde | Cinnacure (30%) | 10 | 3 | CertisEurope |
| NN | 3,5-dimethoxycinnamic acid | 99% | 2 | 2 | Aldrich |
| OO | 3,5-dimethoxycinnamic acid | 99% | 4 | 4 | Aldrich |
| PP | 3,5-dimethoxycinnamic acid | 99% | 8 | 8 | Aldrich |
| QQ | metaldehyde | 40% | 3.8 | 1.5 | Luxan |
| RR | metaldehyde | 40% | 7.5 | 3 | Luxan |
| SS | metaldehyde | 40% | 11 | 4.5 | Luxan |
| TT | metaldehyde | 40% | 15 | 6 | Luxan |

| | **Test Compounds** | | | | |
|---|---|---|---|---|---|
| K | thiacloprid | Calypso 480 SC | 2 | 1 | Bayer |
| L | thiacloprid | Calypso 480 SC | 10 | 4.8 | Bayer |
| UU | imidacloprid | Gaucho 70 WS | 2 | 1.4 | Bayer |
| VV | imidacloprid | Gaucho 70 WS | 4 | 2.8 | Bayer |
| WW | imidacloprid | Gaucho 70 WS | 8 | 5.6 | Bayer |
| XX | imidacloprid | Gaucho 70 WS | 12 | 8.1 | Bayer |

| | **Controls** | | | | |
|---|---|---|---|---|---|
| GG | untreated | - | 0 | 0 | - |
| G | | | | | |
| HHH | untreated + Sepiret | - | 0 | 0 | - |
| * Sepiret® seed film coating (Seppic, Inc., Fairfield, N.J.) | | | | | |

**Table 2.**

| **Additional data and germination percentages for the present Example**. | | | | | | | | |
|---|---|---|---|---|---|---|---|---|
| **Test No.** | **Compound** | **Dos. ml** | **Sepiret (g)** | **Water (ml)** | **Quality of coating*** | | | **Percentage germinated** |
| | | | | | **Bad** | **Moderate** | **Good** | |
| | **Insecticides** | | | | | | | |
| AA | azadirachtine | 2 | 0 | 6 | | | x | 90 |
| BB | azadirachtine | 10 | 0 | 0 | | | x | 65 |
| HH | abamectine | 2 | 0 | 8 | | x | | 47 |
| II | abamectine | 10 | 0 | 16 | | | x | 2 |
| JJ | thiamethoxam | 2 | 0 | 10 | | | x | 88 |
| KK | thiamethoxam | 4 | 0 | 6 | | | x | 78 |
| LL | thiamethoxam | 8 | 0 | 2 | | | x | 61 |
| MM | thiamethoxam | 23 | 0 | 0 | | x | | 73 |

| | **Molluscicides** | | | | | | | |
|---|---|---|---|---|---|---|---|---|
| U | methiocarb | 2 | 0 | 8 | x | | | 61 |
| V | methiocarb | 4 | 0 | 4 | | x | | 63 |
| W | methiocarb | 8 | 0 | 2 | | | x | 27 |
| X | cinnamaldehyde | 2 | 0 | 8 | | | x | 25 |
| Y | cinnamaldehyde | 4 | 0 | 2 | | | x | 0 |
| Z | cinnamaldehyde | 10 | 0 | 0 | | x | | 0 |
| NN | dimethoxycinnamic acid | 2 | 2 | 8 | | | x | 75 |
| OO | dimethoxycinnamic acid | 4 | 4 | 8 | | | x | 75 |
| PP | dimethoxycinnamic acid | 8 | 6 | 12 | | | x | 38 |
| QQ | metaldehyde | 3.8 | 2 | 8 | | | x | 56 |
| RR | metaldehyde | 7.5 | 4 | 10 | | | x | 31 |
| SS | metaldehyde | 11 | 6 | 0 | | | x | 48 |
| TT | metaldehyde | 15 | 10 | 0 | | | x | 8 |

| | **Test Compounds** | | | | | | | |
|---|---|---|---|---|---|---|---|---|
| K | thiacloprid | 2 | 0 | 6 | | | x | 73 |
| L | thiacloprid | 10 | 0 | 0 | | | x | 58 |
| UU | imidacloprid | 2 | 0 | 8 | | | x | 78 |
| VV | imidacloprid | 4 | 0 | 6 | | x | | 89 |
| WW | imidacloprid | 8 | 0 | 6 | | | x | 71 |
| XX | imidacloprid | 12 | 0 | 0 | | | x | 77 |

| | **Controls** | | | | | | | |
|---|---|---|---|---|---|---|---|---|
| GGG | Untreated | 0 | 0 | 0 | | | x | 90 |
| HHH | Untreated + Sepiret | 0 | 5 | 6 | | | x | 90 |

| | | | | | | | | |
|---|---|---|---|---|---|---|---|---|
| * = seeds were visually inspected 6 days after coating | | | | | | | | |

The seeds were sown in earthenware pots with an internal diameter of 20 cm and a height of 18 cm, filled with 7 cm of potting soil (Trio BV, Weesp, The Netherlands) and with a top 2 cm of white quartz sand. A total of 40 seeds was placed in each pot, in a pattern of concentric circles on top of the quartz sand, the germ facing upwards. To each pot a total of 5 adult specimens of the test slug *Deroceras reticulatum* (grey field slug) were added. The pots were incubated at ± 15°C with a relative humidity of ± 90% and light regime of ± 12 hours light/12 hours dark, without artificial lighting. The pots were not irrigated overhead. In total, 4 parallel tests were performed for each test.

Following the addition of the slugs, the number of damaged seeds was counted after 2, 3, 7, 10 and 14 days. The number of plants present (germinated and not eaten or damaged by the slugs) was determined 3, 7, 10 and 14 days after the start of the test. After 14 days the number of utilizable plants was also determined, i.e. the plants that despite some damage would exhibit a normal development. The number of dead slugs was counted 2, 3, 7, 10 and 14 days after the start of the test (but not removed). Finally, on days 3, 7, 10 and 14 after the start of the test, the number fecal pellets was counted.

The data were statistically analysed by using F-tests (α = 0.05) and pair-wise Student-tests. Results are displayed in Tables 3-6 below.

**Table 3.**

| **Mean number of damaged seeds per pot on 5 dates, days after sowing, and percentage of damaged seeds after 14 days**. | | | | | | | | |
|---|---|---|---|---|---|---|---|---|
| **Obj.** | **Compound** | **Dos. ml** | **2 days** | **3 days** | **7 days** | **10 days** | **14 days** | **%** |
| | **Insecticides** | | | | | | | |
| AA | azadirachtine | 2 | 5.8 | 20.8 | 37.0 | 37.0 | 38.0 | 95 |
| BB | azadirachtine | 10 | 4.0 | 13.0 | 30.5 | 32.5 | 34.5 | 86 |
| HH | abamectine | 2 | 3.8 | 14.3 | 35.8 | 35.5 | 37.0 | 93 |
| II | abamectine | 10 | 1.5 | 3.3 | 21.0 | 23.8 | 24.3 | 61 |
| JJ | thiamethoxam | 2 | 5.0 | 18.0 | 37.3 | 39.0 | 38.8 | 97 |
| KK | thiamethoxam | 4 | 1.8 | 15.5 | 37.0 | 36.5 | 39.0 | 98 |
| LL | thiamethoxam | 8 | 2.0 | 10.3 | 29.8 | 30.8 | 33.8 | 84 |
| MM | thiamethoxam | 23 | 0.5 | 8.5 | 29.8 | 30.0 | 31.5 | 79 |

| | **Molluscicides** | | | | | | | |
|---|---|---|---|---|---|---|---|---|
| U | methiocarb | 2 | 2.0 | 5.3 | 19.3 | 17.0 | 17.8 | 44 |
| V | methiocarb | 4 | 1.3 | 3.3 | 10.8 | 4.8 | 5.0 | 13 |
| W | methiocarb | 8 | 1.8 | 2.5 | 4.5 | 3.3 | 3.3 | 8 |
| X | cinnamaldehyde | 2 | 2.0 | 5.5 | 24.5 | 24.8 | 25.8 | 64 |
| Y | cinnamaldehyde | 4 | 3.3 | 6.5 | 26.5 | 27.0 | 29.0 | 73 |
| Z | cinnamaldehyde | 10 | 4.0 | 7.0 | 10.3 | 10.3 | 14.8 | 37 |
| NN | dimethoxycinnamic acid | 2 | 5.0 | 17.5 | 39.5 | 39.3 | 39.8 | 99 |
| OO | dimethoxycinnamic acid | 4 | 4.3 | 17.3 | 31.8 | 32.0 | 34.8 | 87 |
| PP | dimethoxycinnamic acid | 8 | 1.8 | 13.0 | 30.3 | 31.5 | 33.8 | 84 |
| QQ | metaldehyde | 3.8 | 0 | 0.3 | 2.5 | 1.3 | 2.8 | 7 |
| RR | metaldehyde | 7.5 | 0 | 0 | 3.5 | 2.5 | 2.5 | 6 |
| SS | metaldehyde | 11 | 0 | 0 | 1.0 | 0.3 | 0.3 | 1 |
| TT | metaldehyde | 15 | 0.3 | 0 | 0.8 | 0 | 0 0 | |

| | **Test Compounds** | | | | | | | |
|---|---|---|---|---|---|---|---|---|
| K | thiacloprid | 2 | 1.3 | 3.3 | 7.5 | 5.5 | 5.3 | 13 |
| L | thiacloprid | 10 | 0.5 | 1.5 | 3.3 | 3.3 | 3.3 | 8 |
| UU | imidacloprid | 2 | 2.8 | 10.3 | 33.0 | 33.5 | 34.3 | 86 |
| VV | imidacloprid | 4 | 1.0 | 7.3 | 32.8 | 31.5 | 32.3 | 81 |
| WW | imidacloprid | 8 | 1.3 | 4.5 | 23.8 | 23.5 | 23.8 | 59 |
| XX | imidacloprid | 12 | 0.0 | 4.3 | 11.5 | 7.8 | 8.8 | 22 |

| | **Controls** | | | | | | | |
|---|---|---|---|---|---|---|---|---|
| GGG | Untreated | 0 | 4.3 | 18.8 | 39.3 | 31.8 | 39.5 | 99 |
| HHH | Untrd + Sepir. | 0 | 2.0 | 9.5 | 26.3 | 26.8 | 28.0 | 70 |
| Mean | | | 2.9 | 11.1 | 25.4 | 25.2 | 26.6 | 67 |
| LSD (α = 0.05) | | | 3.2 | 8.6 | 12.7 | 12.5 | 12.0 | 30 |
| F-prob. | | | | < 0.001 | < 0.001 | < 0.001 | < 0.001 | < 0.001 |
| **Bold-faced type** = significantly different from untreated seed (Test No. GGG) | | | | | | | | |

**Table 4.**

| **Mean number of plants present per pot on 4 dates, days after sowing, and number of utilizable plants after 14 days.** | | | | | | | |
|---|---|---|---|---|---|---|---|
| **Obj.** | **Compound** | **Dos. ml** | **3 days** | **7 days** | **10 days** | **14 days** | **Utilizable** |
| | **Insecticides** | | | | | | |
| AA | azadirachtine | 2 | 5.3 | 1.0 | 1.3 | 0.8 | 0.8 |
| BB | azadirachtine | 10 | 4.8 | 2.8 | 3.3 | 3.8 | 2.3 |
| HH | abamectine | 2 | 6.3 | 0 | 0.8 | 0.8 | 0.8 |
| II | abamectine | 10 | 3.8 | 6.0 | 8.8 | 9.0 | 9.0 |
| JJ | thiamethoxam | 2 | 7.3 | 0.3 | 0.3 | 0.3 | 0.3 |
| KK | thiamethoxam | 4 | 6.0 | 0.3 | 0 | 0 | 0 |
| LL | thiamethoxam | 8 | 5.5 | 5.3 | 5.5 | 5.5 | 3.8 |
| MM | thiamethoxam | 23 | 6.8 | 6.3 | 7.0 | 5.8 | 2.5 |

| | **Molluscicides** | | | | | | |
|---|---|---|---|---|---|---|---|
| U | methiocarb | 2 | 10.5 | 16.5 | 19.8 | 21.3 | 15.5 |
| V | methiocarb | 4 | 7.8 | 22.8 | 30.3 | 29.8 | 19.8 |
| W | methiocarb | 8 | 4.3 | 32.0 | 33.8 | 34.8 | 33.0 |
| X | cinnamaldehyde | 2 | 3.3 | 5.0 | 6.8 | 6.8 | 6.8 |
| Y | cinnamaldehyde | 4 | 3.0 | 1.3 | 1.8 | 0.8 | 0.5 |
| Z | cinnamaldehyde | 10 | 5.0 | 0.3 | 0.5 | 0.8 | 0.5 |
| NN | dimethoxycinnamic acid | 2 | 3.5 | 0 | 0 | 0 | 0 |
| OO | dimethoxycinnamic acid | 4 | 9.3 | 1.8 | 2.0 | 2.0 | 1.5 |
| PP | dimethoxycinnamic acid | 8 | 1.5 | 1.0 | 1.5 | 1.5 | 1.0 |
| QQ | metaldehyde | 3.8 | 9.3 | 34.8 | 33.0 | 34.0 | 32.3 |
| RR | metaldehyde | 7.5 | 3.5 | 34.3 | 35.3 | 35.0 | 34.3 |
| SS | metaldehyde | 11 | 9.8 | 34.0 | 35.8 | 36.5 | 36.3 |
| TT | metaldehyde | 15 | 6.3 | 35.0 | 35.0 | 35.3 | 34.5 |

| | **Test Compounds** | | | | | | |
|---|---|---|---|---|---|---|---|
| K | thiacloprid | 2 | 6.3 | 27.8 | 28.5 | 29.3 | 28.8 |
| L | thiacloprid | 10 | 10.5 | 32.8 | 34.0 | 34.8 | 34.5 |
| UU | imidacloprid | 2 | 3.8 | 2.8 | 4.5 | 3.3 | 2.5 |
| VV | imidacloprid | 4 | 2.3 | 1.3 | 4.0 | 3.5 | 0.8 |
| WW | imidacloprid | 8 | 13.8 | 9.0 | 9.5 | 10.5 | 7.3 |
| XX | imidacloprid | 12 | 11.8 | 16.3 | 19.0 | 20 | 14.3 |

| | **Controls** | | | | | | |
|---|---|---|---|---|---|---|---|
| GGG | Untreated | 0 | 1.5 | 0 | 0.5 | 0.3 | 0.3 |
| HHH | Untrd + Sepir. | 0 | 10.8 | 12.0 | 11.3 | 11.3 | 10.5 |
| Mean | | | 5.5 | 9.0 | 9.6 | 9.7 | 8.5 |
| LSD (α = 0.05) | | | 8.4 | 10.9 | 11.7 | 11.7 | 11.1 |
| F-prob. | | | 0.111 | < 0.001 | < 0.001 | < 0.001 | < 0.001 |
| **Bold-faced type** = significantly different from untreated seed (Test No. GGG) | | | | | | | |

**Table 5.**

| **Mean number of dead slugs per pot on 5 dates, days after sowing.** | | | | | | | |
|---|---|---|---|---|---|---|---|
| **Obj.** | **Compound** | **Dos. ml** | **2 days** | **3 days** | **7 days** | **10 days** | **14 days** |
| | **Insecticides** | | | | | | |
| AA | azadirachtine | 2 | 0.3 | 0.3 | 0.3 | 0.3 | 0.5 |
| BB | azadirachtine | 10 | 0 | 0 | 0 | 0.3 | 0.3 |
| HH | abamectine | 2 | 0 | 0 | 0 | 0.3 | 0.3 |
| II | abamectine | 10 | 0.3 | 0.5 | 1.3 | 1.3 | 1.5 |
| JJ | thiamethoxam | 2 | 0 | 0 | 0 | 0 | 0 |
| KK | thiamethoxam | 4 | 0 | 0 | 0 | 0.3 | 0.5 |
| LL | thiamethoxam | 8 | 0 | 0 | 0 | 0 | 0.3 |
| MM | thiamethoxam | 23 | 0 | 0.3 | 0.3 | 0.8 | 0.8 |

| | **Molluscicides** | | | | | | |
|---|---|---|---|---|---|---|---|
| U | methiocarb | 2 | 0.3 | 0.3 | 0.3 | 0.3 | 0.5 |
| V | methiocarb | 4 | 0 | 0 | 0.3 | 0.3 | 1.8 |
| W | methiocarb | 8 | 0 | 0.3 | 0.5 | 1.3 | 1.5 |
| X | cinnamaldehyde | 2 | 0 | 1.3 | 1.3 | 1.3 | 1.8 |
| Y | cinnamaldehyde | 4 | 0 | 0 | 0.3 | 0.3 | 0.8 |
| Z | cinnamaldehyde | 10 | 0 | 1.3 | 1.3 | 1.3 | 1.3 |
| NN | dimethoxycinnamic acid | 2 | 0 | 0 | 0.3 | 0.3 | 0.8 |
| OO | dimethoxycinnamic acid | 4 | 0 | 0.3 | 0.3 | 0.3 | 1.0 |
| PP | dimethoxycinnamic acid | 8 | 0 | 0 | 0 | 0 | 0 |
| QQ | metaldehyde | 3.8 | 0 | 0 | 0 | 0 | 0.5 |
| RR | metaldehyde | 7.5 | 0 | 0 | 0.8 | 1.0 | 1.5 |
| SS | metaldehyde | 11 | 0 | 0 | 0.5 | 0.5 | 1.0 |
| TT | metaldehyde | 15 | 0 | 0.3 | 0.8 | 0.8 | 1.0 |

| | **Test Compounds** | | | | | | |
|---|---|---|---|---|---|---|---|
| K | thiacloprid | 2 | 0 | 0.3 | 0.5 | 0.5 | 0.8 |
| L | thiacloprid | 10 | 0 | 0 | 0 | 0.3 | 0.3 |
| UU | imidacloprid | 2 | 0 | 0 | 0 | 0.3 | 0.5 |
| VV | imidacloprid | 4 | 0 | 0.3 | 0.3 | 0.3 | 0.3 |
| WW | imidacloprid | 8 | 0 | 0 | 0 | 0.3 | 0.5 |
| XX | imidacloprid | 12 | 0 | 1.5 | 1.5 | 1.5 | 1.5 |

| | **Controls** | | | | | | |
|---|---|---|---|---|---|---|---|
| GGG | Untreated | 0 | 0 | 0 | 0 | 0.3 | 0.5 |
| HHH | Untrd + Sepir. | 0 | 0.3 | 1.3 | 2.0 | 2.0 | 2.0 |
| Mean | | | 0.1 | 0.3 | 0.5 | 0.6 | 0.8 |
| LSD (α = 0.05) | | | 0.5 | 1.2 | 1.5 | 1.5 | 1.7 |
| F-prob. | | | 0.584 | 0.495 | 0.174 | 0.241 | 0.255 |
| **Bold-faced type** = significantly different from untreated seed (Test No. GGG) | | | | | | | |

**Table 6.**

| **Mean number fecal pellets per pot on 4 dates, days after sowing.** | | | | | | |
|---|---|---|---|---|---|---|
| **Obj.** | **Compound** | **Dos. ml** | **3 days** | **7 days** | **10 days** | **14 days** |
| | **Insecticides** | | | | | |
| AA | azadirachtine | 2 | 62 | 106 | 139 | 156 |
| BB | azadirachtine | 10 | 32 | 93 | 130 | 138 |
| HH | abamectine | 2 | 43 | 119 | 133 | 140 |
| II | abamectine | 10 | 15 | 89 | 106 | 114 |
| JJ | thiamethoxam | 2 | 42 | 107 | 158 | 144 |
| KK | thiamethoxam | 4 | 30 | 115 | 126 | 133 |
| LL | thiamethoxam | 8 | 33 | 85 | 108 | 112 |
| MM | thiamethoxam | 23 | 20 | 91 | 122 | 131 |

| | **Molluscicides** | | | | | |
|---|---|---|---|---|---|---|
| U | methiocarb | 2 | 18 | 43 | 47 | 50 |
| V | methiocarb | 4 | 16 | 34 | 35 | 36 |
| W | methiocarb | 8 | 6 | 23 | 27 | 27 |
| X | cinnamaldehyde | 2 | 47 | 71 | 80 | 95 |
| Y | cinnamaldehyde | 4 | 46 | 111 | 152 | 160 |
| Z | cinnamaldehyde | 10 | 54 | 58 | 77 | 93 |
| NN | dimethoxycinnamic acid | 2 | 66 | 115 | 133 | 141 |
| OO | dimethoxycinnamic acid | 4 | 46 | 120 | 138 | 158 |
| PP | dimethoxycinnamic acid | 8 | 60 | 106 | 150 | 158 |
| QQ | metaldehyde | 3.8 | 1 | 4 | 5 | 31 |
| RR | metaldehyde | 7.5 | 2 | 4 | 4 | 6 |
| SS | metaldehyde | 11 | 2 | 2 | 1 | 3 |
| TT | metaldehyde | 15 | 1 | 3 | 4 | 5 |

| | **Test Compounds** | | | | | |
|---|---|---|---|---|---|---|
| K | thiacloprid | 2 | 14 | 23 | 17 | 21 |
| L | thiacloprid | 10 | 5 | 8 | 7 | 9 |
| UU | imidacloprid | 2 | 33 | 118 | 109 | 116 |
| VV | imidacloprid | 4 | 21 | 108 | 118 | 126 |
| WW | imidacloprid | 8 | 11 | 48 | 65 | 75 |
| XX | imidacloprid | 12 | 9 | 26 | 35 | 38 |

| | **Controls** | | | | | |
|---|---|---|---|---|---|---|
| GGG | Untreated | 0 | 64 | 164 | 124 | 126 |
| HHH | Untrd + Sepir. | 0 | 40 | 82 | 108 | 115 |
| Mean | | | 36 | 81 | 96 | 103 |
| LSD (α = 0.05) | | | 32 | 61 | 60 | 65 |
| F-prob. | | | < 0.001 | < 0.001 | < 0.001 | < 0.001 |
| **Bold-faced type** = significantly different from untreated seed (Test No. GGG) | | | | | | |

### Seed damage

Seed treatment with a commercial insecticide composition comprising abamectine (Trigard®) only resulted in significantly less damaged seeds than the control when dosed as 10 ml/kg, after 3, 7 and 14 days. The dosage of 10 ml/kg seed showed less damaged seeds after 3 and 14 days than the dosage of 2 ml/kg.

Application of a commercial slug feeding deterrent composition comprising cinnamaldehyde (Cinnacure®) resulted in all dosages in significantly less damaged seeds after 3 and 7 days than the untreated seed (see Table 3). In the dosage of 2 ml/kg and 10 ml/kg this was also the case after 14 days. Additionally, treatment with 10 ml/kg gave after 7 and 10 days a controlling effect.

Application of 2, 4 and 8 ml of a commercial molluscicidal composition comprising methiocarb (Mesurol®) per kg of seed gave significantly less damaged seeds from day 3 after sowing than the untreated pots. Treatment with 8 ml/kg resulted after 10 days after sowing in less damage than 2 ml/kg. The 4 ml/kg dosage gave this response after 14 days.

Application of 3.8, 7.5, 11 or 15 ml of a molluscicidal composition comprising metaldehyde per kg of seed resulted with all dosages applied in significantly less damaged seeds than in the control situation; the number of damaged seeds was the lowest of all treatments tested. A dose-respons was not encountered.

Application of 2 or 10 ml of a commercial thiacloprid composition (Calypso@) per kg of seed resulted at each observation (after 2 days only 10 ml) in less damaged seeds than the untreated control seed. Both dosages gave equally low numbers of damaged seeds.

Treatment with 12 ml of a commercial imidacloprid composition (Gaucho@) per kg of seed also resulted at each observation in significantly less damaged seeds than in the untreated pots. Treatment with 8 ml/kg gave a significant controlling effect after 3, 7 and 14 days, i.e. the number of damaged seeds was significantly lower compared to untreated seed (Table 3).

The dosage of 2 ml/kg gave no controlling effect and the dosage of 4 ml/kg gave a controlling effect only after 2 and 3 days. The imidacloprid composition in the dosage of 12 ml/kg seed gave a lower number of damaged seeds than the dosage of 8 ml/kg after 10 and 14 days.

The untreated seed with Sepiret-coating resulted 3 and 7 days after the start of the experiment in less damaged seeds than the untreated comtrol seed without coating. On other dates no differences were found.

Application of azadirachtine, thiamethoxam, dimethoxycinnamic acid did not result in significant differences in the number of damaged seeds.

### Plants present

Application of 2, 4 or 8 ml per kg of seed of a commercial molluscicidal composition comprising methiocarb (Mesurol®) resulted in significantly more plants present after 3 (only 2 ml), 7, 10 and 14 days after the start of the experiment than the untreated pots (see Table 4). Treatment with 8 ml/kg gave, relative to 2 ml/kg, after 7, 10, and 14 days more plants present and after 14 days more utilizable plants.

Seed treatment with a molluscicidal composition comprising metaldehyde resulted after 7 days in significantly more plants present at all dosages and significantly more utilizable plants than untreated. A dose-respons was not encountered.

Application of both 2 and 10 ml per kg of seed of a commercial thiacloprid composition (Calypso@) resulted after 7 days in significantly more plants present and utilizable plants than the untreated seed. There was no difference in the number of plants between the two dosages.

Treatment with 12 ml/kg imidacloprid resulted at each observation in significantly more plants present than the untreated seed. 7 days after sowing, this was higher than application of 2 or 4 ml/kg. Treatment with 8 ml imidacloprid per kg of seed gave only after 3 days significantly more plants present than the untreated seed. After 14 days 12 ml of imidacloprid per kg of seed gave more utilizable plants in comparison to the untreated seed and there was a dosage effect relative to the 2 and 4 ml/kg dosages.

The remaining seed treatments did not result in any differences in the number of plants present or the number of utilizable plants relative to the untreated seed.

### Dead slugs and fecal pellets

Seed treatment with 2 or 10 ml of a commercial slug feeding deterrent composition comprising cinnamaldehyde (Cinnacure®) per kg of seed resulted 3 days after the start of the experiment in significantly more dead slugs relative to the untreated seed (see Table 5) and also relative to the seed treatment with 4 ml of the same commercial slug feeding deterrent composition per kg seed.

Treatment with 12 ml/kg of the imidacloprid composition resulted 3 and 7 days after the start of the experiment in significantly more dead slugs than the untreated seed.

Treatment with both the dosages of the thiacloprid composition resulted at all days observed in a large and significant reduction in the number of fecal pellets (see Table 6) encountered in the pots.

The remaining treatments gave no significantly different number of dead slugs in comparison to the untreated seed.

So the seed treatment with thiacloprid, methiocarb or metaldehyde resulted at each dosage and at each observation in significantly less fecal pellets, produced by the slugs, than the untreated seed (Table 6).

Application of 12 ml per kg of seed of the imidacloprid composition also resulted with each observation in significantly less fecal pellets than the untreated seed. De remaining treatments gave no significant reduction in fecal pellets or only in the first 7 days.

### Conclusion

- Azadirachtine, abamectine or thiamethoxam treatment provides no sufficient protection to the plants. Although several effect were observed such as less damage to seeds and less fecal pellets these insecticides provided no slug controlling or plant protecting effect.
- 3,5-Dimethoxycinnamic acid 99%, a known slug feeding deterrent provides no slug controlling effect in the present experimental setup.
- Cinnamaldehyde, another known slug feeding deterrent provides no protection to the plant. The compound has an effect on slugs, but is at the same time phytotoxic. So although treatment produced significantly less damaged seeds in many cases, the number of plants present and the number of utilizable plants was practically the same as that of the untreated seed and although the seed is little damaged, no plants develop.
- Methiocarb a known molluscicide provides good protection to both seeds and plants in this experiment although the treatment has little effect on the slug population.
- Metaldehyde a known molluscicide provides excellent protection against slugs. This compound results in less fecal pellets and less damaged seeds, more plants present and more utilizable plants. It was observed that there was also more mucus excretion visible on the soil in comparison to pots with untreated seeds.
- Thiacloprid provides a good protection of the wheat against slugs. Two weeks after the start of the experiment the treatment resulted in less fecal pellets, less damaged seeds, a higher number of plants present and a higher number of utilizable plants remaining than in the control experiments. The number of dead slugs was however no less compared to the untreated seeds.
- Imidacloprid is a good slug controlling agent at a dosage of 12 ml per kg of seed. This dose resulted in less fecal pellets and in less damaged seeds, in a higher number of plants present and in a higher number of utilizable plants remaining after 14 days than in the control experiments.

### Example 2

### Experimental set-up

Based on the results of the experiment described in Example 1, a selection was made from the various test numbers of that experiment for retesting, partly to confirm the conclusions of that experiment and to test the unexpected outcome of some test compounds.

The selection of test numbers (Test No.) used in the present experiment relative to those of the experiment described in Example 1 is shown in Table 7.

**Table 7.**

| **Compounds and dosages used for seed treatment-based slug control in winter wheat**. | | | | | |
|---|---|---|---|---|---|
| **Test No.** | **Active compound** | **Trade name and formulation** | **Dosage per kg of seed** | | **Manufacturer/Sup plier** |
| | | | **Geformulated (ml)** | **Active comp. (g)** | |
| | **Insecticides** | | | | |
| II | abamectine | Trigard 75 WP | 10 | 7.5 | Syngenta Crop Protection |

| | **Molluscicides** | | | | |
|---|---|---|---|---|---|
| U | methiocarb | Mesurol 500 FS | 2 | 1 | Bayer |
| V | methiocarb | Mesurol 500 FS | 4 | 2 | Bayer |
| X | cinnamaldehyde | Cinnacure | 2 | 0,6 | Certis Europe |
| Y | cinnamaldehyde | Cinnacure | 4 | 1,2 | Certis Europe |
| Z | cinnamaldehyde | Cinnacure | 10 | 3 | Certis Europe |
| QQ | metaldehyde | 40% | 3.8 | 1.5 | Luxan |

| | **Test Compounds** | | | | |
|---|---|---|---|---|---|
| K | thiacloprid | Calypso 480 SC | 2 | 1 | Bayer |
| WW | imidacloprid | Gaucho 70 WS | 8 | 5.6 | Bayer |
| XX | imidacloprid | Gaucho 70 WS | 12 | 8.1 | Bayer |

| | **Controls** | | | | |
|---|---|---|---|---|---|
| GGG | untreated | - | 0 | 0 | - |
| HHH | untreated + Sepiret | - | 0 | 0 | |

The same seeds as described in Example 1 were sown in earthenware pots with an internal diameter of 20 cm and a height of 18 cm, filled with 7 cm of potting soil (Trio BV, Weesp, The Netherlands) and with a top 2 cm of white quartz sand. A total of 40 seeds was placed in each pot, in a pattern of concentric circles on top of the quartz sand, the germ of the seed facing upwards. To each pot a total of 5 adult specimens of the test slug *Deroceras reticulatum* (grey field slug) were added. The pots were incubated at 18-19°C with a relative humidity of± 95% and light regime of± 18 hours light / 6 hours dark, without artificial lighting. The pots were not irrigated overhead. In total, 4 parallel tests were performed for each test.

The number of damaged seeds was, the number of plants present (germinated and not eaten or damaged by the slugs), the number of dead slugs and of the number of fecal pellets were determined after 2, 3 and 7 days following the addition of the slugs. After 7 days the number of utilizable plants was also determined, i.e. the plants that despite some damage would exhibit a normal development.

The data were statistically analysed by using F-tests (α = 0.05) and pair-wise Student-tests. Results are displayed in Tables 8-11 below.

### Results

Two days after the start of the experiment the seed treatments with abamectine, methiocarb, cinnamaldehyde, metaldehyde and thiacloprid and imidacloprid resulted all in a significant reduction in the number of damaged seeds relative to the untreated seed (see Table 8).

**Table 8.**

| **Mean number of damaged seeds per pot on 3 dates, days after sowing, and percentage of damaged seeds after 7 days.** | | | | | | |
|---|---|---|---|---|---|---|
| **Test No.** | **Compound** | **Dosage (ml)** | **2 days** | **3 days** | **7 days** | **Percentage** |
| | **Insecticides** | | | | | |
| II | abamectine | 10 | 2.8 | 6.0 | 12.5 | 31 |

| | **Molluscicides** | | | | | |
|---|---|---|---|---|---|---|
| U | methiocarb | 2 | 2.5 | 4.8 | 5.5 | 14 |
| V | methiocarb | 4 | 1.8 | 2.0 | 3.5 | 9 |
| X | cinnamaldehyde | 2 | 8.8 | 15.0 | 25.0 | 63 |
| Y | cinnamaldehyde | 4 | 5.0 | 8.8 | 14.3 | 36 |
| Z | cinnamaldehyde | 10 | 6.0 | 10.5 | 15.8 | 39 |
| QQ | metaldehyde | 3.8 | 0.5 | 0.3 | 0.3 | 1 |

| | **Test Compounds** | | | | | |
|---|---|---|---|---|---|---|
| K | thiacloprid | 2 | 3.5 | 4.5 | 5.8 | 14 |
| WW | imidacloprid | 8 | 4.8 | 9.0 | 9.0 | 23 |
| XX | imidacloprid | 12 | 1.8 | 3.8 | 4.8 | 12 |

| | **Controls** | | | | | |
|---|---|---|---|---|---|---|
| GGG | Untreated | 0 | 15.8 | 28.5 | 31.3 | 78 |
| HHH | Untrd + Sepir. | 0 | 14.0 | 23.0 | 30.3 | 76 |
| Mean | | | 6.9 | 11.8 | 15.2 | 38 |
| LSD (α = 0.05) | | | 5.4 | 6.6 | 7.7 | 19 |
| F-prob. | | | < 0.001 | < 0.001 | < 0.001 | < 0.001 |
| **Bold-faced type** = significantly different from untreated seed (Test No. GGG) | | | | | | |

Application of methiocarb, metaldehyde, thiacloprid and imidacloprid resulted after 2, 3 en 7 days in significantly more plants present than the untreated seed (see Table 9). Also the number utilizable plants was higher.

Treatment with cinnamaldehyde or abamectine gave no significantly different results in the number of plants present.

Treatment with the molluscicides methiocarb and metaldehyde resulted in more plants present and in more utilizable plants at the end of the experiment. The same was observed for the thiacloprid and imidacloprid treatments (see Table 9).

**Table 9.**

| **Mean number of plants present per pot on 3 dates, days after sowing and number of utilizable plants after 7 days.** | | | | | | |
|---|---|---|---|---|---|---|
| **Test No** | **Compound** | **Dosage (ml)** | **2 days** | **3 days** | **7 days** | **Utilizable** |
| | **Insecticides** | | | | | |
| II | abamectine | 10 | 0.3 | 1.3 | 4.5 | 2.0 |
| | Molluscicides | | | | | |
| U | methiocarb | 2 | 9.0 | 22.5 | 34.0 | 26.8 |
| V | methiocarb | 4 | 28.3 | 33.3 | 34.5 | 32.5 |
| X | cinnamaldehyde | 2 | 0 | 0 | 0 | 0 |
| Y | cinnamaldehyde | 4 | 0 | 0 | 0 | 0 |
| Z | cinnamaldehyde | 10 | 0 | 0 | 0 | 0 |
| QQ | metaldehyde | 3.8 | 20.8 | 32.5 | 35.8 | 34.3 |

| | **Test Compounds** | | | | | |
|---|---|---|---|---|---|---|
| K | thiacloprid | 2 | 12.5 | 24.0 | 29.5 | 23.5 |
| WW | imidacloprid | 8 | 7.8 | 12.3 | 18.3 | 13.5 |
| XX | imidacloprid | 12 | 16.0 | 24.5 | 28.3 | 22.8 |

| | **Controls** | | | | | |
|---|---|---|---|---|---|---|
| GGG | Untreated | 0 | 1.5 | 1.5 | 1.0 | 0.5 |
| HHH | Untrd + Sepir. | 0 | 1.8 | 3.3 | 4.3 | 2.3 |
| Mean | | | 7.3 | 12.4 | 15.0 | 11.5 |
| LSD (α = 0.05) | | | 5.1 | 7.9 | 6.7 | 8.7 |
| F-prob. | | | < 0.001 | < 0.001 | < 0.001 | < 0.001 |
| **Bold-faced type** = significantly different from untreated seed (Test No. GGG) | | | | | | |

More dead slugs were observed during the course of the experiment only with the molluscicides methiocarb and metaldehyde. The remaining compounds had no effect on the number of dead slugs observed (see Tabel 10).

**Table 10.**

| **Mean number of dead slugs per pot on 3 dates, days after sowing.** | | | | | |
|---|---|---|---|---|---|
| **Test No.** | **Compound** | **Dosage (ml)** | **2 days** | **3 days** | **7 days** |
| | **Insecticides** | | | | |
| II | abamectine | 10 | 0 | 0.3 | 0.8 |

| | **Molluscicides** | | | | |
|---|---|---|---|---|---|
| U | methiocarb | 2 | 0.3 | 0.5 | 2.3 |
| V | methiocarb | 4 | 0 | 1.8 | 3.3 |
| X | cinnamaldehyde | 2 | 0 | 0 | 0.5 |
| Y | cinnamaldehyde | 4 | 0 | 0 | 0.8 |
| Z | cinnamaldehyde | 10 | 0 | 0 | 0.5 |
| QQ | metaldehyde | 3.8 | 0.5 | 0.8 | 3.0 |

| | **Test Compounds** | | | | |
|---|---|---|---|---|---|
| K | thiacloprid | 2 | 0 | 0 | 0.3 |
| WW | imidacloprid | 8 | 0 | 0 | 1.0 |
| XX | imidacloprid | 12 | 0 | 0 | 0.8 |

| | **Controls** | | | | |
|---|---|---|---|---|---|
| GGG | Untreated | 0 | 0 | 0 | 1.0 |
| HHH | Untrd + Sepir. | 0 | 0 | 0.3 | 0.8 |
| Mean | | | 0.1 | 0.3 | 1.2 |
| LSD (α = 0.05) | | | 0.3 | 0.8 | 1.2 |
| F-prob. | | | 0.074 | < 0.001 | < 0.001 |
| **Bold-faced type** = significantly different from untreated seed (Test No. GGG) | | | | | |

After 2, 3 and 7 days, the application of methiocarb, metaldehyde, thiacloprid and imidacloprid resulted in a significant reduction in the number of fecal pellets observed per pot relative to the untreated control (Table 11).

**Table 11.**

| **Mean number of fecal pellets per pot on 3 dates, days after sowing.** | | | | | |
|---|---|---|---|---|---|
| **Test No.** | **Compound** | **Dosage (ml)** | **2 days** | **3 days** | **7 days** |
| | **Insecticides** | | | | |
| II | abamectine | 10 | 11 | 30 | 69 |

| | **Molluscicides** | | | | |
|---|---|---|---|---|---|
| U | methiocarb | 2 | 1 | 9 | 20 |
| V | methiocarb | 4 | 2 | 7 | 11 |
| X | cinnamaldehyde | 2 | 45 | 91 | 124 |
| Y | cinnamaldehyde | 4 | 28 | 58 | 82 |
| Z | cinnamaldehyde | 10 | 42 | 77 | 91 |
| QQ | metaldehyde | 3,8 | 0 | 0 | 5 |

| | **Test Compounds** | | | | |
|---|---|---|---|---|---|
| K | thiacloprid | 2 | 8 | 14 | 17 |
| WW | imidacloprid | 8 | 6 | 17 | 29 |
| XX | imidacloprid | 12 | 3 | 17 | 28 |

| | **Controls** | | | | |
|---|---|---|---|---|---|
| GGG | Untreated | 0 | 40 | 77 | 95 |
| HHH | Untrd + Sepir. | 0 | 31 | 66 | 85 |
| Mean | | | 19 | 42 | 58 |
| LSD (α = 0.05) | | | 15 | 29 | 34 |
| F-prob. | | | < 0.001 | < 0.001 | < 0.001 |
| **Bold-faced type** = significantly different from untreated seed (Test No. GGG) | | | | | |

### Conclusions

- Seed treatment with the insecticide abamectine does not give the desired effect. The number fecal pellets and the number of damaged seeds was significantly lower than the control in some instances, but the number of present plants and the number of utilizable plants was not higher than the untreated controls as a result of the phytotoxic effect on the seeds.
- Seed treatment with the molluscicide methiocarb provides a fairly food protection of the seeds against slugs. Methiocarb treatment also increased the number of dead slugs observed. Further, at all time points and dosages the methiocarb treatment the number of plants present and the number of utilizable plants were higher and the number of damaged seeds and the number of fecal pellets were lower.
- Cinnamaldehyde treatment of the seeds does not result in the desired effect. Although in some instances significantly less damaged seeds were found relative to the untreated seed, other observations gave no significant differences. Cinnamaldehyde resulted in an equal number of fecal pellets in comparison to the control. Although less seeds were damaged than in the untreated control (more than 50% reduction), very few seeds germinated as a result of the phytotoxic effect on the seeds.
- Treatment with metaldehyde results in a good action against slugs. The treatment results in more dead slugs and less fecal pellets. Further, the number of damaged seeds is lower and the number of present plants and of utilizable plants is higher. Also more mucus was produced by the slugs.
- Treatment with thiocloprid provides good results. Hoewel no difference in the number of dead slugs was found, this treatment resulted in less damaged seeds, more present and utilizable plants and less fecal pellets than the untreated seed.
- Treatment with imidacloprid also provides a good result. De number of fecal pellets and of damaged seeds was lower and the number of present plants and of utilizable plants was higher.

## Claims

1. Use of a compound of the formula: 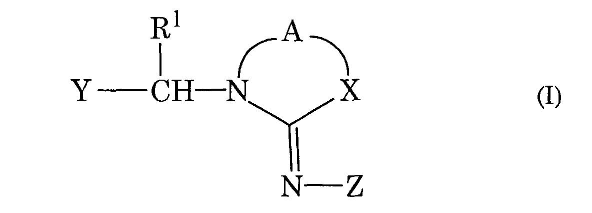 wherein
R¹ denotes a hydrogen atom or a methyl group,
A denotes an ethylene group which can be substituted by methyl, or a trimethyl goup which can be substituted by methyl,
X denotes an oxygen or sulphur atom or the group 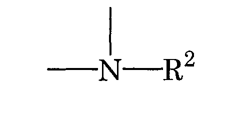 or 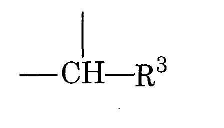 wherein
R² denotes a hydrogen atom, a C₁-C₄-alkyl group which can be substituted by a substituent selected from amongst halogens, C₁-C₄-alkoxy groups, C₁-C₄-alkylthio groups and cyano, a C₂-C₄-alkenyl group, a C₂-C₄-alkinyl group, a pyridylmethyl group which can be substituted by halogen and/or methyl, a benzyl group which can be substituted by halogen and/or methyl, a formyl group, an alkylcarbonyl group having 1 or 2 carbon atoms in the alkyl structural unit which can be substituted by halogen, a phenylcarbonyl group which can be substituted by halogen and/or methyl, an alkoxy or alkylthiocarbonyl group having 1 to 4 carbon atoms in the alkyl structural unit, a phenoxycarbonyl group, a C₁-C₄-alkylsulphonyl group which can be substituted by halogen, or a phenylsulphonyl group which can be substituted by methyl, and
R³ denotes a hydrogen atom, and
Y denotes a 5- or 6-membered heterocyclic group which contains two or three hetero atoms selected from amongst oxygen, sulphur, and nitrogen atoms, at least one of these being a nitrogen atom, or denotes a 3-pyridyl group, the heterocyclic group and the 3-pyridyl group optionally being substituted by at least one substituent selected from amongst halogen atoms, alkyl groups having 1 to 4 carbon atoms, alkoxy groups having 1 to 4 carbon atoms, alkylthio groups having 1 to 4 carbon atoms, halogenoalkyl groups having 1 to 4 carbon atoms, halogenoalkoxy groups having 1 to 4 carbon atoms, alkylsulphonyl groups having 1 to 4 carbon atoms, the cyano group and the nitro group, and
Z denotes the group
―NO₂
or
―CN,
as a molluscicidal agent.

2. Use according to claim 1, wherein said compound is thiacloprid or imidacloprid.

3. Molluscicidal composition comprising a compound of the formula (I) as defined in claim 1 as an active ingredient and an agronomically acceptable carrier and optionally a coating compound.

4. Composition according to claim 3, wherein said compound is thiacloprid or imidacloprid.

5. Composition according to claim 3, wherein said compound is thiacloprid.

6. Method of preventing mollusc-related damage to a plant in which an effective amount of a composition comprising a compound of the formula (I) as defined in claim 1 is administered to the locus, roots or leaves, preferably to the seeds of said plant.

7. A seed comprising a coating, said coating comprising a compound of the formula (I) as defined in claim 1, preferably thiacloprid.

8. Method of coating a seed, comprising treating a seed with a coating composition, said coating composition comprising a compound of the formula (I) as defined in claim 1 and a coating compound.

9. Method of controlling a mollusc in horticulture or agriculture comprising applying to the mollusc, the locus of the mollusc, or a food source of the mollusc an effective amount of a molluscicidal composition comprising a compound of the formula (I) as defined in claim 1.

10. Molluscicidal composition concentrate comprising a 1 to 10000, preferably 100 - 5000 times concentrated formulation of a molluscicidal composition comprising a compound of the formula (I) as defined in claim 1.

11. Method for the preparation of a molluscicidal composition, comprising combining a compound of the formula (I) as defined in claim 1 as an active ingredient with an agronomically acceptable carrier.
